# EUROPÄISCHE PATENTSCHRIFT

(11) **EP 2 945 501 B1**
(45) Veröffentlichungstag und Bekanntmachung des Hinweises auf die Patenterteilung: **06.05.2020**
(21) Anmeldenummer: 14700512.8
(22) Anmeldetag: 15.01.2014
(51) Int. Cl.: B29D 99/00, A41D 1/084, A41D 31/28

(54) **MEHRLAGIGES KÖRPERSCHUTZELEMENT**
MULTI-LAYER BODY PROTECTION ELEMENT
ÉLÉMENT DE PROTECTION CORPORELLE À PLUSIEURS COUCHES

(30) Priorität: 16.01.2013 DE 202013100221 U
(43) Veröffentlichungstag der Anmeldung: 25.11.2015
(73) Patentinhaber: KTJ Kunststofftechnik Junker GmbH, 78628 Rottweil (DE)
(72) Erfinder: JUNKER, Jürgen, 78586 Deilingen (DE)
(74) Vertreter: Westphal, Mussgnug & Partner Patentanwälte mbB
(86) Internationale Anmeldenummer: PCT/EP2014/050728
(87) Internationale Veröffentlichungsnummer: WO 2014/111433

(56) Entgegenhaltungen:
- WO-A2-2008/088974
- DE-A1- 4 336 468
- DE-A1-102008 034 496
- DE-U1- 9 305 803
- DE-U1-202008 011 774
- US-B1- 6 918 140

## Beschreibung

Die vorliegende Erfindung betrifft ein mehrlagiges Körperschutzelement gemäß dem Oberbegriff des Patentanspruchs 1 und ein Verfahren zur Herstellung eines mehrlagigen Körperschutzelements gemäß dem Oberbegriff der Patentansprüche 13 und 16.

Körperschutzelemente sind beispielweise aus DE 43 36 468 A1, DE 93 05 803 U1, WO 2008/088974 A2, und DE 20 2008 004 129 U1 bekannt.

Aus dem Stand der Technik sind verschiedenartige Körperschutzelemente, die beispielsweise als Sitzeinlagen für Fahrradhosen zum Einsatz kommen bekannt, wobei bei den aus dem Stand der Technik bekannten Körperschutzelementen, insbesondere im Bereich der Fahrradhosen standardmäßig geschäumte Polyurethane als vollflächig eingesetztes dämpfendes Element zum Einsatz kommen.

Aus den aus dem Stand der Technik bekannten Körperschutzelementen wird es als nachteilig empfunden, dass diese wenig luft- und schweißdurchlässig sind und damit einen für längere Tragedauern unzureichenden Tragekomfort aufweisen.

Es ist die Aufgabe der vorliegenden Erfindung ein weiterentwickeltes Körperschutzelement zur Verfügung zu stellen, das insbesondere einen erhöhten Tragekomfort aufweist und dennoch sehr gute, bevorzugt aber verbesserte Dämpfungseigenschaften aufweist.

Diese Aufgabe wird durch ein Körperschutzelement mit den Merkmalen des Patentanspruchs 1 und ein Verfahren zur Herstellung eines mehrlagigen Körperschutzelements mit den Merkmalen der Patentansprüche 13 und 16 gelöst.

Vorteilhafte Weiterbildungen sind Gegenstand von Unteransprüchen.

Ein erfindungsgemäßes Körperschutzelement ist mehrlagig aufgebaut mit wenigstens einer ersten Lage durchbrochen ausgebildet und aus einem luftdurchlässigen Gewebe aus einem ersten Material mit einer dämpfenden zweiten Lage. Das Körperschutzelement ist als Sitzeinlage für eine Fahrradhose ausgebildet. Erfindungsgemäß ist die zweite Lage aus einem zweiten Material gefertigt, das aus der Gruppe der thermoplastischen Elastomere, einem Polyurethan oder einem Silikon ausgewählt ist
Als Gewebe im Sinne der vorliegenden Anmeldung werden sowohl gewebte als auch maschenartige sowie gitterartige flächige Gebilde erstanden.

Durch eine mehrlagige Ausbildung des Körperschutzelementes mit einer aus einem luftdurchlässigen Gewebe und einem dämpfenden Element, das durchbrochen ausgebildet und aus einem der oben genannten Materialien gefertigt ist wird erreicht, dass durch die in der zweiten Lage, die dämpfend ausgebildet ist, vorgesehenen Durchbrechungen Wärme- und Wasserdampf bzw. Schweiß austreten können und somit ein verbesserter Luft- und Wärmetransport durch das Körperschutzelement gewährleistet werden kann. Im Vergleich zu den bisherigen Schaum- oder Kaltschaumpolstern weist das vorliegende Körperschutzelement außerdem den Vorteil auf, dass durch Verwendung eines dämpfenden Materials mit einer nach außen hin geschlossenen Oberfläche ein Schwammeffekt vermieden werden kann, der eine Anreicherung von Schweiß in dem dämpfenden Material begünstigen würde.

Außerdem ist die zweite Lage des Körperschutzelementes gitter- oder wabenförmig mit das Gitter oder die Waben bildenen Stegen und zwischen den Stegen angeordneten Öffnungen ausbildet.

Wie bereits beschrieben kann durch eine durchbrochene Struktur, die aber vorteilhafterweise gitter- oder wabenförmig ausgeformt ist, eine verbesserte Wärme- und Feuchtigkeitstransport stattfinden, so dass das Körperschutzelement von einem Träger insgesamt als angenehmer empfunden wird.

Gemäß der vorliegenden Definition eines Gewebes kann das Gewebe der ersten Lage bevorzugt durch ein Spritzgussverfahren erzeugt sein. In einer bevorzugten Weiterbildung ist auch die zweite Lage durch ein Spritzgussverfahren hergestellt.

Auf diese Weise besteht die Möglichkeit, sowohl die erste Lage als auch die zweite Lage durch ein Spritzgussverfahren herzustellen und somit die Kombination der beiden Lagen, abhängig von den verwendeten Materialien, in einem Zweikomponentenspritzgußverfahren herzustellen.

Unabhängig vom Material und dem Herstellungsverfahren für die erste Lage wird ein mehrlagiges Körperschutzelement bevorzugt, bei dem die zweite Lage auf die erste Lage aufgespritzt ist. Alternativ kann die zweite Lage auf die erste Lage in einem 3D Druckverfahren aufgebracht sein.

Eine derartige Anordnung ist besonders dann günstig, wenn die zweite Lage das Gewebe der ersten Lage wenigstens abschnittsweise mechanisch formschlüssig greift.

Es wird auf diese Weise eine gute mechanische Verbindung zwischen der dämpfenden zweiten Lage und dem Gewebe der ersten Lage hergestellt, so dass insbesondere eine einfache Weiterverarbeitung des Körperschutzelements ermöglicht wird.

In einer weiteren Ausgestaltungsform des mehrlagigen Körperschutzelements sind die zweite Lage und die erste Lage wenigstens teilweise miteinander verschmolzen.

Eine derartige Ausgestaltung hat den Vorteil, dass zusätzlich zu einem mechanisch formschlüssigen Umgreifen eine Verbindung der Materialien vorhanden ist, die eine zusätzliche Stabilität der Verbindung zwischen den beiden Lagen gewährleistet.

Die zweite Lage weist eine regelmäßige Gitterstruktur auf, so dass die zweite Lage beispielsweise durch Aneinanderreihen von dreieckförmigen, rechteckigen oder rautenförmigen Elementen gebildet ist.

Eine besonders effektive Dämpfung von auf das Körperschutzelement einwirkenden Stößen kann erreicht werden, wenn das Körperschutzelement wenigstens vier, bevorzugt sechs Lagen aufweist, wobei jeweils die dämpfende zweite Lage aus dem zweiten Material auf eine erste Lage aus dem ersten Material folgt, so dass eine sandwichartige Struktur gebildet wird.

Bei einer solchen sandwichartigen Struktur ist es vorteilhaft, wenn die dämpfenden zweiten Lagen derart angeordnet ist, dass einzelne Elemente der Gitterstruktur gegen gleich übereinander liegen. Ist die Gitterstruktur beispielsweise aus dreieckförmigen gleichseitigen Elementen gebildet, so ist es vorteilhaft, wenn in der Sandwichstruktur jeweils die Spitze eines Dreiecks auf der Basis eines Dreiecks der darunter liegenden dämpfenden Schicht angeordnet ist. Bei Verwendung von beispielsweise rechteckigen Elementen für die Gitterstruktur ist es vorteilhaft, wenn die in der Gitterstruktur gebildeten Kreuzungspunkte einer dämpfenden Schicht im Bereich der Öffnung der darunter liegenden dämpfenden Schicht angeordnet sind.

Auf diese Weise werden ein hervorragender Luft- und Feuchtigkeitstransport sowie eine optimale Dämpfung erreicht.

Die dämpfende zweite Lage weist bevorzugt eine Schichtdicke von wenigstens zwei, bevorzugt drei Millimetern auf. In einer bevorzugten Ausgestaltungsform kann das mehrlagige Körperschutzelement bevorzugt anatomisch vorgeformt ausgestaltet sein.

Um für eine solche Sitzeinlage für eine Fahrradhose eine noch bessere Dämpfung zu erreichen, kann das Körperschutzelement im Bereich des Sitzbeins und/oder des Schambeins eine Einlage mit einem in einem Gewebe, bevorzugt einem Gewebesack angeordneten Granulat aus einem thermoplastischen Elastomer oder einem Silikon aufweisen.

Das verwendete Granulat weist dafür einen Durchmesser von etwa 1,5 mm bis 6 mm auf.

In einer weiteren Ausgestaltungsform eines mehrlagigen Körperschutzelementes kann die dämpfende zweite Lage eine Drahteinlage aufweisen, die durch Bestromung eine Aufwärmung des Körperschutzelementes ermöglicht.

Gemäß einer weiteren Ausgestaltung der Erfindung weist das Körperschutzelement ein Textil auf und die zweite Lage ist auf die erste Lage und das Textil aufgespritzt. Alternativ kann die zweite Lage auf die erste Lage und das Textil in einem 3D Druckverfahren aufgebracht sein.

Eine besonders hohe Dämpfung von auf das Körperschutzelement einwirkenden Stößen entsteht, wenn das Körperschutzelement wenigstens vier Lagen aufweist, wobei die oberste und die unterste Lagen aus dem ersten Material und die mittleren Lagen aus dem zweiten Material gefertigt sind.

Ein erfindungsgemäßes Verfahren zur Herstellung eines mehrlagigen Körperschutzelements mit wenigstens einer ersten Lage aus einem luftdurchlässigen Gewebe aus einem ersten Material und einer dämpfenden zweiten Lage, die durchbrochen ausgebildet ist und aus einem zweiten Material gefertigt ist, das aus der Gruppe der thermoplastischen Elastomere, einem Polyurethan oder einem Silikon ausgewählt ist, zeichnet sich dadurch aus, dass beim Erzeugen der zweiten Lage, die zweite Lage mit der ersten Lage verbunden wird, wobei das Körperschutzelement als Sitzeinlage für eine Fahrradhose ausgebildet ist. Die zweite Lage kann beispielweise auf die erste Lage aufgespritzt oder in einem 3D Druckverfahren gefertigt werden.

In einem weiteren Verfahren zur Herstellung eines mehrlagigen Körperschutzelement mit wenigstens einem Textil, einer auf dem Textil gelegenen ersten Lage aus einem luftdurchlässigen Gewebe aus einem ersten Material und einer auf der ersten Lage gelegenen dämpfenden zweiten Lage, die durchbrochen ausgebildet und aus einem zweiten Material gefertigt ist, ausgewählt aus einem thermoplastischen Elastomer, einem Polyurethan oder einem Silikon, wird die zweite Lage gleichzeitig auf die erste Lage und das Textil aufgespritzt. Damit kann das Körperschutzelement mit nur einem Verbindungsprozess fertiggestellt werden.

Dies Verfahren ist besonders geeignet, wenn die Fahrradhose aus dem Textil hergestellt wird.

Die vorliegende Erfindung wird nachfolgend und anhand eines Ausführungsbeispiels mit Bezugnahme auf die beigefügten Figuren eingehend erläutert. Es zeigen:
- Figur 1: ein mehrlagiges Körperschutzelement gemäß der vorliegenden Erfindung,
- Figur 2: ein Beispiel für eine dämpfende zweite Lage, wie sie dem Körperschutzelement gemäß Figur 1 zum Einsatz kommen kann, und
- Figur 3: ein als Sitzeinlage für eine Fahrradhose ausgestaltetes Körperschutzelement.

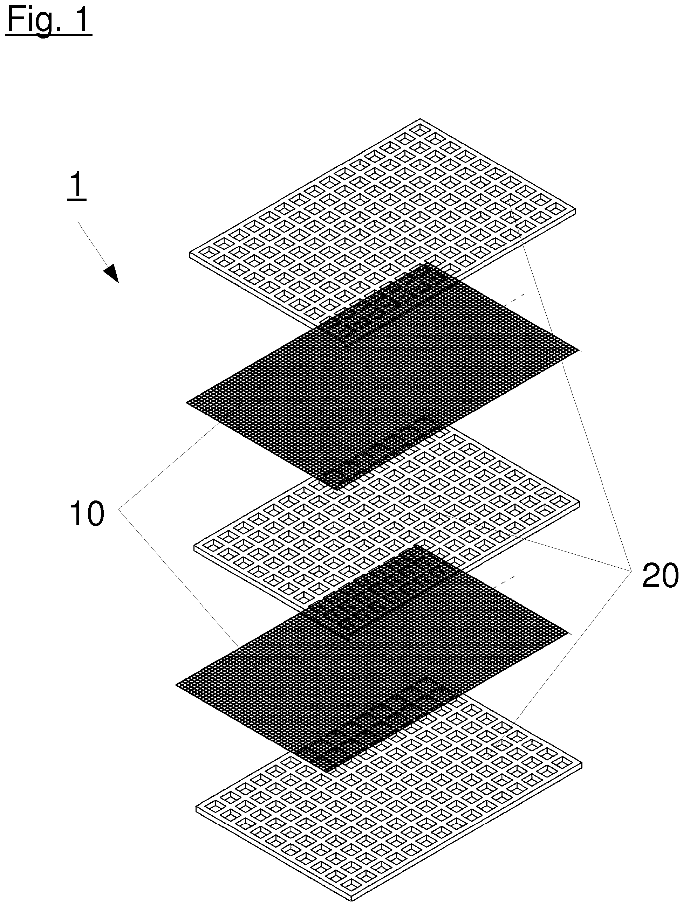

Figur 1 zeigt eine Explosionsdarstellung eines mehrlagigen Körperschutzelementes 1, das aus jeweils zwei ersten Lagen 10 eines luftdurchlässigen Gewebes sowie zwei zweiten Lagen 20 eines gitterartig ausgebildeten dämpfenden Materiales, beispielsweise einem thermoplastischen Elastomer, gebildet ist. In der gezeigten Schichtabfolge ist jeweils die zweite Lage 20 unmittelbar auf die erste Lage 10 in einem Spritzgussverfahren aufgespritzt, so dass bei dem vorliegenden Körperschutzelement 1 eine Umschmelzung des Gewebes der ersten Lage 10 durch das Material der zweiten Lage 20 erfolgt. Das Material der zweiten Lage 20 dringt damit in das Gewebe der ersten Lage 10 ein und stellt durch die Umschmelzung der einzelnen Fasern des Gewebes eine feste Verbindung zwischen der ersten Lage 10 und der zweiten Lage 20 her, ohne dass die luftdurchlässigen Eigenschaften der beiden Lagen 10, 20 verloren gehen.

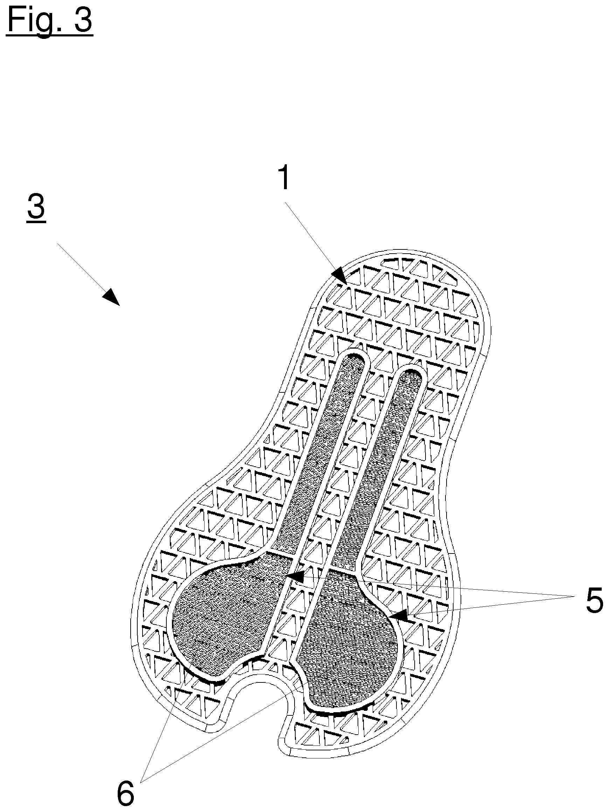

Dadurch, dass die zweite Lage 20 auf die erste Lage 10 unmittelbar aufgespritzt ist, besteht außerdem die Möglichkeit, dass durch eine entsprechend ausgeformte Spritzgussform bereits eine anatomische Vorformung des mehrlagigen Köperschutzelements 1 erfolgen kann. Insbesondere, wenn das Körperschutzelement 1, wie dies in Figur 3 dargestellt ist, als Einlage für eine Fahrradhose verwendet wird, ist eine anatomische Ausformung an die menschliche Gesäßform wünschenswert und möglich.

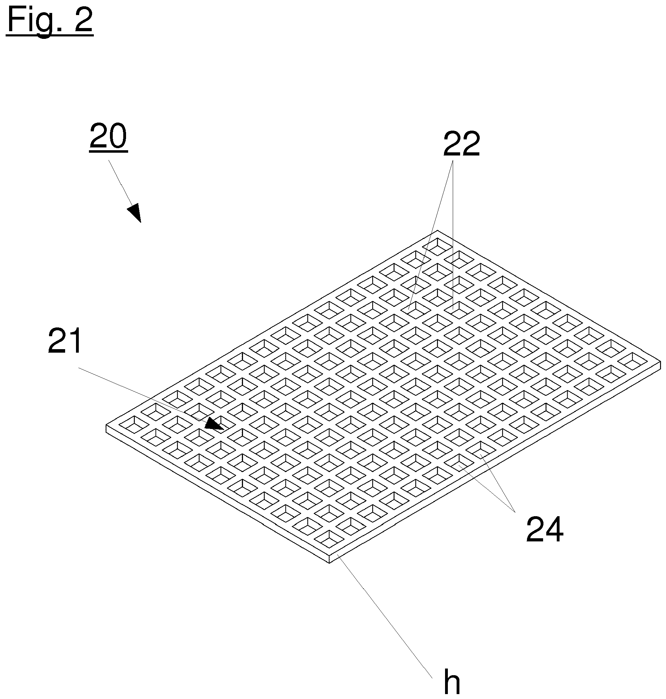

In Figur 2 ist die zweite Lage 20, wie sie in dem Körperschutzelement 1 aus Figur 1 verwendet wird nochmals separat dargestellt. In Figur 2 ist besonders deutlich zu erkennen, dass die zweite Lage 20 eine regelmäßige Gitterstruktur 21 aufweist, die aus rechtwinklig zueinander angeordneten Stegen 22 und dazwischenliegenden Zwischenräumen 24 gebildet ist. Die in Figur 2 dargestellte Gitterstruktur 21 mit rechteckigen Gitterelementen soll lediglich beispielhaft sein und den grundsätzlichen Aufbau der zweiten Lage 20 verdeutlichen. Andere Ausgestaltungsformen der Gitterstruktur 21 beispielsweise mit dreieckförmigen oder rautenförmigen Elementen sind ebenso möglich und werden entsprechend des geplanten Einsatzes des Körperschutzelementes hinsichtlich Form und Größe ausgewählt werden.

Die zweite Lage 20 weist im vorliegenden Ausführungsbeispiel eine Höhe h von 3 mm auf. Je nach Einsatzgebiet des Körperschutzelementes 1 kann die Höhe der zweiten Lage 20 variiert und an den jeweiligen Verwendungsfall angepasst werden.

In Figur 3 ist ein mehrlagiges Körperschutzelement 1 gezeigt, das als Sitzeinlage 3 für eine Fahrradhose ausgestaltet ist.

Das Körperschutzelement 1 weist außerdem in einem Bereich, der bei Verwendung in einer Fahrradhose am Körper des Trägers im Bereich des Sitzbeins und des Schambeins in Anlage kommt zusätzliche Einlagen 5 auf. Die Einlagen 5 sind aus Gewebesäckchen gebildet, die mit einem Granulat 6 eines thermoplastischen Elastomers oder eines Silikons gefüllt sind. Durch eine zusätzliche Anordnung dieser Einlagen 5 kann eine erhöhte Dämpfungswirkung im Bereich des Sitz- und Schambeins erreicht werden, so dass insgesamt ein höherer Tragekomfort für die Fahrradhose erreicht wird. Die gezeigten Einlagen 5 können entweder in Aussparungen der zweiten Lage 20 oder als zusätzliche Schicht des mehrlagigen Körperschutzelementes 1 vorgesehen sein.

Insgesamt weist das vorliegende Körperschutzelement 1 den Vorteil auf, dass durch die Verwendung eines luftdurchlässigen Gewebes in Verbindung mit einer zweiten durchbrochenen, insbesondere gitter- oder wabenförmig ausgebildeten zweiten Lage 20 aus einem thermoplastischen Elastomer, einem Polyurethan oder einem Silikon, ein Körperschutzelement 1 mit sehr guter Luftdurchlässigkeit und einem sehr guten Schweißabtransport erreicht wird. Das vorliegende Körperschutzelement 1 weist damit einen im Vergleich zum Stand der Technik erhöhten Tragekomfort auf.

### Bezugszeichenliste

- 1: Körperschutzelement
- 3: Sitzeinlage
- 5: Einlage
- 6: Granulat

- 10: erste Lage

- 20: zweite Lage
- 21: Gitterstruktur
- 22: Stege
- 24: Zwischenräume

- h: Schichtdicke

## Patentansprüche

1. Mehrlagiges Körperschutzelement (1) mit wenigstens einer ersten Lage (10) aus einem luftdurchlässigen Gewebe aus einem ersten Material und einer dämpfenden zweiten Lage (20), wobei die zweite Lage (20) durchbrochen ausgebildet und aus einem zweiten Material gefertigt ist, wobei das Körperschutzelement (1) als Sitzeinlage für eine Fahrradhose ausgebildet ist,
**dadurch gekennzeichnet, dass**
das zweite Material ausgewählt ist aus einem thermoplastischen Elastomer, einem Polyurethan oder einem Silikon, wobei die zweite Lage (20) gitter- oder wabenförmig mit das Gitter oder die Waben bildenden Stegen (22) und zwischen den Stegen (22) angeordneten Öffnungen ausgebildet ist, wobei die zweite Lage (20) eine regelmäßige Gitterstruktur aufweist, wobei die Gitterstruktur dreieckförmige, rechteckige oder rautenförmige Elemente aufweist.

2. Mehrlagiges Körperschutzelement (1) gemäß Anspruch 1,
**dadurch gekennzeichnet, dass**
die zweite Lage (20) das Gewebe der ersten Lage (10) wenigstens Abschnittsweise mechanisch formschlüssig umgreift.

3. Mehrlagiges Körperschutzelement (1) gemäß einem der vorhergehenden Ansprüche,
**dadurch gekennzeichnet, dass**
die zweite Lage (20) und die erste Lage (10) wenigstens teilweise verschmolzen sind.

4. Mehrlagiges Körperschutzelement (1) gemäß einem der vorhergehenden Ansprüche,
**dadurch gekennzeichnet, dass**
das Körperschutzelement (1) wenigstens vier, bevorzugt sechs Lagen aufweist, wobei jeweils eine Lage des zweiten Materials auf eine Lage des ersten Materials folgt.

5. Mehrlagiges Körperschutzelement (1) gemäß Anspruch 4,
**dadurch gekennzeichnet, dass**
die die Lagen derart aufeinander angeordnet sind, dass Elemente der zweiten Lage gegengleich übereinander liegen.

6. Mehrlagiges Körperschutzelement (1) gemäß einem der vorhergehenden Ansprüche,
**dadurch gekennzeichnet, dass**
die zweite Lage (20) eine Schichtdicke von wenigstens 2 mm, bevorzugt 3 mm aufweist.

7. Mehrlagiges Körperschutzelement (1) gemäß einem der vorhergehenden Ansprüche,
**dadurch gekennzeichnet, dass**
das Körperschutzelement (1) anatomisch vorgeformt ausgestaltet ist.

8. Mehrlagiges Körperschutzelement (1) gemäß einem der vorhergehenden Ansprüche,
**dadurch gekennzeichnet, dass**
das Körperschutzelement (1) im Bereich des Sitzbeins und/ oder des Schambeins eine Einlage (5) mit einem in einem Gewebe bevorzugt einem Gewebesack angeordneten Granulat aus einem thermoplastischen Elastomer oder einem Silikon aufweist.

9. Mehrlagiges Körperschutzelement (1) gemäß Anspruch 8,
**dadurch gekennzeichnet, dass**
das Granulat (6) einen Korndurchmesser von 1,6 mm bis 6 mm aufweist.

10. Mehrlagiges Körperschutzelement (1) gemäß einem der vorhergehenden Ansprüche,
**dadurch gekennzeichnet, dass**
die zweite Lage (20) eine Drahteinlage aufweist.

11. Mehrlagiges Körperschutzelement (1) gemäß einem der vorhergehenden Ansprüche,
**dadurch gekennzeichnet, dass** das Körperschutzelement ein Textil aufweist.

12. Mehrlagiges Körperschutzelement (1) gemäß einem der vorhergehenden Ansprüche,
**dadurch gekennzeichnet, dass** das Körperschutzelement (1) wenigstens vier Lagen aufweist, wobei die oberste und die unterste Lagen aus dem ersten Material und die mittleren Lagen aus dem zweiten Material gefertigt sind.

13. Verfahren zur Herstellung eines mehrlagigen Körperschutzelements (1) gemäß einem der Ansprüche 1-12 mit wenigstens einer ersten Lage (10) aus einem luftdurchlässigen Gewebe aus einem ersten Material und einer dämpfenden zweiten Lage (20), die durchbrochen ausgebildet, wobei das Körperschutzelement (1) als Sitzeinlage für eine Fahrradhose ausgebildet ist,
**dadurch gekennzeichnet, dass**
beim Erzeugen der zweiten Lage (20), die zweite Lage (20) mit der ersten Lage (10) verbunden wird, wobei die zweite Lage aus einem zweiten Material gefertigt ist, ausgewählt aus einem thermoplastischen Elastomer, einem Polyurethan oder einem Silikon.

14. Verfahren zur Herstellung eines mehrlagigen Körperschutzelements (1) gemäß Anspruch 13,
**dadurch gekennzeichnet, dass**
die zweite Lage (20) auf die erste Lage (10) aufgespritzt wird.

15. Verfahren zur Herstellung eines mehrlagigen Körperschutzelements (1) gemäß Anspruch 13,
**dadurch gekennzeichnet, dass**
die zweite Lage (20) auf die erste Lage (10) in einem 3D Druckverfahren aufgebracht wird.

16. Verfahren zur Herstellung eines mehrlagigen Körperschutzelements (1) gemäß einem der Ansprüche 1-12 mit wenigstens einem Textil, einer auf dem Textil gelegenen ersten Lage (10) aus einem luftdurchlässigen Gewebe aus einem ersten Material und einer auf der ersten Lage (10) gelegenen dämpfenden zweiten Lage (20), die durchbrochen ausgebildet ist,
**dadurch gekennzeichnet, dass**
die zweite Lage (20) gleichzeitig auf die erste Lage (10) und das Textil aufgespritzt wird, wobei die zweite Lage aus einem zweiten Material gefertigt ist, ausgewählt aus einem thermoplastischen Elastomer, einem Polyurethan oder einem Silikon.

17. Verfahren zur Herstellung eines mehrlagigen Körperschutzelements (1) gemäß Anspruch 16,
**dadurch gekennzeichnet, dass** das Körperschutzelement (1) als Sitzeinlage für eine Fahrradhose ausgebildet ist und dass die Fahrradhose aus dem Textil hergestellt wird.

## Claims

1. Multilayer body protection element (1) with at least one first layer (10) of an air-permeable fabric made of a first material and with a cushioning second layer (20), wherein the second layer (20) is perforated and is made of a second material, wherein the body protection element (1) is implemented as a seat inlay for cycling shorts,
**characterized in that**
the second material comprises a thermoplastic elastomer, a polyurethane, or a silicon, wherein the second layer (20) is implemented as a latticed or honeycombed structure with crosspieces (22) that form the lattice or the honeycomb and with openings between the crosspieces (22), wherein the second layer (20) has a regular lattice structure, wherein the lattice structure comprises triangular, rectangular, or diamond-shaped elements.

2. Multilayer body protection element (1) in accordance with claim 1,
**characterized in that**
the second layer (20) mechanically, form-fittingly engages at least partially around the fabric of the first layer (10).

3. Multilayer body protection element (1) in accordance with any of the preceding claims,
**characterized in that**
the second layer (20) and the first layer (10) are at least partially fused to each other.

4. Multilayer body protection element (1) in accordance with any of the preceding claims,
**characterized in that**
the body protection element (1) comprises at least four, preferably six layers, wherein each layer of the first material is followed by a layer of the second material.

5. Multilayer body protection element (1) in accordance with claim 4,
**characterized in that**
the layers are arranged on top of each other such that elements of the second layer lie diametrically opposed above each other.

6. Multilayer body protection element (1) in accordance with any of the preceding claims,
**characterized in that**
the second layer (20) has a layer thickness of at least 2 mm, preferably 3 mm.

7. Multilayer body protection element (1) in accordance with any of the preceding claims,
**characterized in that**
the body protection element (1) is designed to be anatomically preformed.

8. Multilayer body protection element (1) in accordance with any of the preceding claims,
**characterized in that**
the body protection element (1) comprises an inlay (5), arranged in the region of the ischium and/or pubis, with a granulate material (6) of a thermoplastic elastomer or of a silicon disposed in a fabric, preferably in a fabric sack.

9. Multilayer body protection element (1) in accordance with claim 8,
**characterized in that**
the granulate material (6) has a grain diameter of 1.6 to 6 mm.

10. Multilayer body protection element (1) in accordance with any of the preceding claims,
**characterized in that**
the second layer (20) comprises a wire inlay.

11. Multilayer body protection element (1) in accordance with any of the preceding claims,
**characterized in that**
the body protection element comprises a textile.

12. Multilayer body protection element (1) in accordance with any of the preceding claims,
**characterized in that**
the body protection element (1) comprises at least four layers, wherein the uppermost and the lowermost layers are made of the first material and the middle layers are made of the second material.

13. Method for manufacturing a multilayer body protection element (1) in accordance with any of claims 1 - 12,
comprising a first layer (10) of an air-permeable fabric made of a first material and a cushioning second layer (20) that is perforated, wherein the body protection element (1) is implemented as a seat inlay for cycling shorts,
**characterized in that**
when the second layer (20) is produced, the second layer (20) is attached to the first layer (10), wherein the second layer is made of a second material which comprises a thermoplastic elastomer, a polyurethane, or a silicon.

14. Method for manufacturing a multilayer body protection element (1) in accordance with claim 13,
**characterized in that**
the second layer (20) is molded onto the first layer (10).

15. Method for manufacturing a multilayer body protection element (1) in accordance with claim 13,
**characterized in that**
the second layer (20) is applied onto the first layer (10) in a 3D printing process.

16. Method for manufacturing a multilayer body protection element (1) in accordance with any of claims 1 - 12,
with at least one textile, a first layer (10) of an air permeable fabric made of a first material and a second cushioning layer (20) lying on the first layer (10) that is implemented perforated,
**characterized in that**
the second layer (20) is simultaneously molded onto the first layer (10) and the textile, wherein the second layer (20) is made of a second material chosen from a thermoplastic elastomer, a polyurethane or a silicon.

17. Method for manufacturing a multilayer body protection element (1) in accordance with claim 16,
**characterized in that**
the body protection element (1) is implemented as an inlay for cycling shorts and that the cycling shorts are made of the textile.

## Revendications

1. Elément de protection corporelle multicouche (1) comprenant au moins une première couche (10) en un tissu perméable à l'air, réalisé en un premier matériau et une seconde couche d'amortissement (20), la seconde couche (20) étant percée et réalisée en un second matériau, l'élément de protection du corps (1) étant réalisé sous la forme de couvre-siège pour un pantalon de moto,
**caractérisé en ce que**
le second matériau est choisi parmi un élastomère thermoplastique, un polyuréthane ou un silicone, la seconde couche (20) étant réalisée en forme de réseau ou de nids d'abeille avec des barrettes (22) formant le réseau ou les nids d'abeille, et des ouvertures entre les barrettes (22),
la seconde couche (20) ayant une structure de réseau, régulière, la structure de réseau comportant des éléments triangulaires, rectangulaires, ou en forme de losange.

2. Elément de protection du corps multicouche (1) conforme à la revendication 1,
**caractérisé en ce que**
la seconde couche (20) vient en prise par une liaison mécanique par la forme au moins par segment, autour du tissu de la première couche (10).

3. Elément de protection du corps multicouche (1) conforme à l'une des revendications précédentes,
**caractérisé en ce que**
la seconde couche (20) et la première couche (10) sont au moins partiellement fondues.

4. Elément de protection du corps multicouche (1) conforme à l'une des revendications précédentes,
**caractérisé en ce qu'**
il comporte au moins quatre, de préférence six couches, chaque couche du second matériau suivant une couche du premier matériau.

5. Elément de protection du corps multicouche (1) conforme à la revendication 4,
**caractérisé en ce que**
les couches sont positionnées les unes sur les autres de sorte que des éléments de la seconde couche soient symétriques ou diamétralement opposés les uns sur les autres.

6. Elément de protection du corps multicouche (1) conforme à l'une des revendications précédentes,
**caractérisé en ce que**
la seconde couche (20) a une épaisseur d'au moins 2mm, de préférence de 3mm.

7. Elément de protection du corps multicouche (1) conforme à l'une des revendications précédentes,
**caractérisé en ce qu'**
il présente une préforme anatomique.

8. Elément de protection du corps multicouche (1) conforme à l'une des revendications précédentes,
**caractérisé en ce que**
l'élément de protection du corps (1) comporte, dans la zone du siège avant ou de l'os iliaque et/ou du pubis, un insert (5) ayant un granulat dans un tissu, de préférence un sac en tissu en un élastomère thermoplastique ou un silicone.

9. Elément de protection du corps multicouche (1) conforme à la revendication 8,
**caractérisé en ce que**
le granulat (6) a une granulométrie comprise entre 1,6mm et 6mm.

10. Elément de protection du corps multicouche (1) conforme à l'une des revendications précédentes,
**caractérisé en ce que**
la seconde couche (20) comporte un insert de fil.

11. Elément de protection du corps multicouche (1) conforme à l'une des revendications précédentes,
**caractérisé en ce qu'**
il comporte un textile.

12. Elément de protection du corps multicouche (1) conforme à l'une des revendications précédentes,
**caractérisé en ce qu'**
il comporte au moins quatre couches, la couche supérieure et la couche inférieure étant réalisées en le premier matériau et les couches médianes étant réalisées dans le second matériau.

13. Procédé de fabrication d'un élément de protection du corps multicouche (1) conforme à l'une des revendications 1 à 12,
comprenant au moins une première couche (10) en un tissu perméable à l'air réalisé en un premier matériau et une seconde couche d'amortissement (20) qui est percée, l'élément de protection du corps (1) étant réalisé sous la forme d'un insert d'assise pour un pantalon de cyclisme, **caractérisé en ce que**
lors de l'obtention de la seconde couche (20), on relie la seconde couche (20) à la première couche (10), la seconde couche étant réalisée en un second matériau choisi parmi un élastomère thermoplastique, un polyuréthane ou un silicone.

14. Procédé de fabrication d'un élément de protection du corps multicouche (1) conforme à la revendication 13,
**caractérisé en ce que**
la seconde couche (20) est injectée sur la première couche (10).

15. Procédé de fabrication d'un élément de protection du corps multicouche (1) conforme à la revendication 13,
**caractérisé en ce que**
la seconde couche (20) est appliquée sur la première couche (10) par un procédé d'impression 3D.

16. Procédé de fabrication d'un élément de protection du corps multicouche (1) conforme à l'une des revendications 1 à 12,
comprenant au moins un textile, une première couche (10) appliquée sur le textile en un tissu perméable à l'air réalisé en un premier matériau et une seconde couche d'amortissement (20) appliquée sur la première couche (10) qui est percée,
**caractérisé en ce que**
la seconde couche (20) est injectée simultanément sur la première couche (10) et le textile, la seconde couche étant réalisée en un second matériau choisi parmi un élastomère thermoplastique, un polyuréthane et un silicone.

17. Procédé de fabrication d'un élément de protection du corps multicouche (1) conforme à la revendication 16,
**caractérisé en ce que**
l'élément de protection du corps (1) est réalisé sous la forme d'un insert d'assise pour un pantalon de cyclisme réalisé en un textile.
